# EUROPEAN PATENT SPECIFICATION

(11) **EP 4 672 772 B1**
(45) Date of publication and mention of the grant of the patent: **12.08.2026**
(21) Application number: 25216353.0
(22) Date of filing: 01.03.2019
(51) Int. Cl.: G02B 7/02, G02B 27/00, H04N 23/55

(54) **SPACER DESIGN FOR MITIGATING STRAY LIGHT**
ABSTANDSHALTERDESIGN ZUR ABSCHWÄCHUNG VON STREULICHT
CONCEPTION D'ESPACEUR POUR ATTÉNUER LA LUMIÈRE PARASITE

(30) Priority: 02.03.2018 US 201862637451 P
(43) Date of publication of application: 31.12.2025
(62) Document number(s) of the earlier application(s) in accordance with Art. 76 EPC: 19760615.5 / 3 759 538
(73) Proprietor: Corephotonics Ltd., 6492103 Tel Aviv (IL)
(72) Inventor: Yedid, Itay, Tel Aviv (IL); Goldenberg, Ephraim, Tel Aviv (IL)
(74) Representative: IPrime Rentsch Kaelin AG

(56) References cited:
- CN-A- 101 634 738
- KR-A- 20120 068 177
- US-A1- 2011 032 409
- US-A1- 2014 160 581
- US-A1- 2015 022 896
- US-A1- 2015 323 757
- US-A1- 2016 349 504
- US-B2- 9 392 188

## Description

### CROSS-REFERENCE TO RELATED APPLICATIONS

This application is related to and claims priority from US Provisional Patent Application No. 62/637,451 filed March 2, 2018.

### FIELD

The presently disclosed subject matter is related in general to lenses of digital cameras, including folded digital cameras.

### BACKGROUND

A typical digital camera includes an image sensor (or simply "sensor") and a lens (also known as "lens assembly", or "lens module"). The lens forms an image on the sensor. A lens may include several lens elements, typically assembled in one lens barrel. Folded cameras (FCs) and double-folded cameras (DFCs) are known, see for example co-owned US Patent No. US9392188

Conventional lens modules are known from US 2014/160581.

### SUMMARY

The invention is defined by the appended claims. According to some examples of the presently disclosed subject matter, there are provided lens modules comprising for separating a first lens element from a second lens element, a spacer comprising a spacer perimeter including a contact section being in contact with the first lens element and the second lens element and a non-contact section being separated from the first lens element.

In addition to the above features, the spacer according to this aspect of the presently disclosed subject matter can optionally comprise one or more of features below, in any technically possible combination or permutation:
i. wherein the non-contact section comprises a non-contact section internal inclined surface having a height D2 extending between an internal contour of the spacer to a base of the non-contact section internal inclined surface, wherein the spacer perimeter has a thickness t extending between a contact point of a back face of the spacer facing the second lens element and a contact point of a front face of the spacer facing the first lens element, and wherein an inclination of the non-contact section internal inclined surface is greater than a ratio D2/t,
ii. wherein height D2 is perpendicular to thickness t,
iv. wherein the first lens element is at an object side relative to the spacer and wherein the second lens element is at an image side relative to the spacer,
v. wherein an optical part of the first lens element or the second lens element is non-circular,
vi. wherein the spacer is included in a camera comprising an image sensor, wherein the non-contact section internal inclined surface is designed to redirect stray light so it does not hit the image sensor,
vii. wherein the sensor is characterized by at least two sides, and wherein each side is characterized by a different length,
viii. wherein the sensor is characterized by a non-circular shape.

According to some examples of the presently disclosed subject matter, there are provided lens modules comprising a plurality of lens elements ordered along a lens symmetry axis from an object side to an image side, each lens module comprising a spacer situated between a lens element and a consecutive lens element from among the plurality of lens elements, the spacer comprising along its perimeter a contact section being in contact with the first lens element and the second lens element and a non-contact section being separated from the first lens element. A spacer in such a lens module may comprise one or more of features above, in any technically possible combination or permutation.

According to some examples of the presently disclosed subject matter, there are provided digital cameras, each digital camera comprising a lens module accommodating a plurality of lens elements ordered along a lens symmetry axis from an object side to an image side and at least one spacer situated between a lens element and a consecutive lens element from among the plurality of lens elements, the spacer comprising a spacer perimeter including a contact section being in contact with the first lens element and the second lens element and a non-contact section being separated from the first lens element. A spacer in such a digital camera may comprise one or more of features above, in any technically possible combination or permutation.

### BRIEF DESCRIPTION OF THE DRAWINGS

Non-limiting examples are described below with reference to figures attached hereto that are listed following this paragraph. Identical structures, elements or parts that appear in more than one figure are generally labeled with a same numeral in all the figures in which they appear. The drawings and descriptions are meant to illuminate and clarify examples of the subject matter disclosed herein, and should not be considered limiting in any way. In the drawings:
FIG. 1A shows schematically a lens in a general isometric view;
FIG. 1B shows a cut through a lens barrel carrying the lens of FIG. 1A, together with a stray light ray path through the barrel to an image sensor, according to examples of the presently disclosed subject matter; and
FIG. 1C shows first and second object side lens elements of the lens of FIG. 1A, separated by a spacer;
FIG. 1D shows in (a) a front, object side, and in (b) a back, image side of the spacer of FIG. 1B;
FIG. 2A shows schematically a lens in a general isometric view, according to examples of the presently disclosed subject matter;
FIG. 2B shows a cut through a lens barrel carrying the lens of FIG. 2A, together with a stray light ray path through the barrel to an image sensor, according to examples of the presently disclosed subject matter
FIG. 2C shows first and second object side lens elements of the lens of FIG. 2A, separated by a spacer, according to examples of the presently disclosed subject matter; and
FIG. 2D shows in (a) a front, object side and in (b) a back, image side of the spacer of FIG. 2B, according to examples of the presently disclosed subject matter;
**FIG. 2E** shows schematically a zoom and auto-focus dual-aperture camera with folded Tele lens module in **(a)** a general isometric view, and **(b)** a side view;
**FIG. 2F** shows schematically in a general isometric view a zoom and auto-focus dual-aperture camera with folded Tele lens module;
**FIG. 3** shows schematically a zoom and auto-focus dual-aperture camera with folded Tele lens module in **(a)** a general isometric view, and **(b)** a side view;
**FIG. 4** shows schematically a zoom and auto-focus dual-aperture camera with folded Tele lens module in **(a)** a general isometric view, and **(b)** a side view;
**FIG. 5** shows schematically details of the auto-focus mechanism for moving the second mirror in the example shown in **FIG. 4** in **(a)** a general isometric view, and **(b)** a cross sectional view through section A-A;
**FIG. 6A** shows schematically in a general isometric view a zoom and auto-focus triple-aperture camera with one folded Tele;
**FIG. 6B** shows schematically in a general isometric view a zoom and auto-focus triple-aperture camera with one folded Tele lens;
**FIG. 6C** shows schematically in a general isometric view a zoom and auto-focus triple-aperture camera with one folded Tele lens;
**FIG. 7** shows schematically in a general isometric view a zoom and auto-focus triple-aperture camera with two folded lenses;
**FIG. 8** shows schematically in a general isometric view a zoom and auto-focus triple-aperture camera with two folded Tele lenses.

### DETAILED DESCRIPTION

In the following detailed description, numerous specific details are set forth in order to provide a thorough understanding. However, it will be understood by those skilled in the art that the presently disclosed subject matter may be practiced without these specific details. In other instances, well-known methods have not been described in detail so as not to obscure the presently disclosed subject matter.

It is appreciated that certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

It is appreciated that unless explicitly set forth otherwise, terms such as "first", "second", "third" and so forth as used herein, are not necessarily meant to imply a particular order, but are only meant to distinguish between different elements or actions. For example, a first lens element and second lens element as used herein do not necessarily refer to the pair of lens elements in lens **100** disclosed herein below, which are located closest to the object side, and may refer to a different pair of lens elements located elsewhere in lens **100,** e.g. second and third lens elements.

Stray light is an undesirable effect where light in an optical system. Stray light is light not intended to enter the optical system according to an optical design, but nonetheless reaches the sensor. In some cases, stray light may come from an intended source (e.g. light reflected from an object in the field of view of the camera), but follows paths other than the intended path (optical path that does not pass through the optical area of all lens elements in a lens module on its path to the sensor). In other cases, stray light may come from a source other than the intended source (e.g. outside the camera field of view (FOV)).

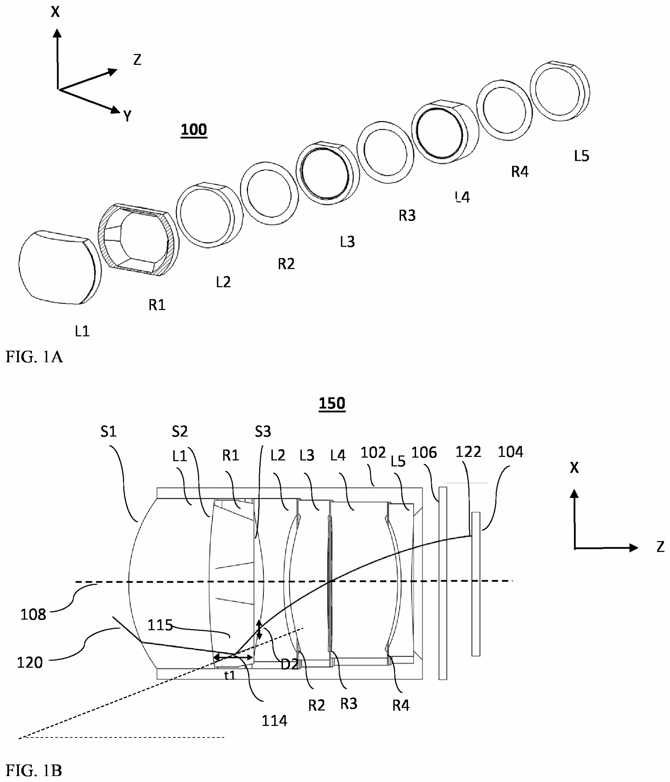

For example, FIG. 1B shows schematically a camera **150** comprising a lens (numbered **100** in FIG. 1A) with stray light **220** reflected from an internal spacer R1 onto an image sensor **104** (as described in more detail below). FIG. 1A shows lens **100** in a general isometric view. Lens **100** includes a plurality (N) lens elements Lᵢ (wherein "i" is an integer between 1 and N) shown in a decomposed view where the different lens elements are illustrated separately. L₁ is the lens element closest to the object side and L_{N} is the lens element closest to the image side, i.e. the side where the image sensor is located. In lens **100** N = 5. This is however not limiting, and a different number of lens elements can be used. According to some examples, N is equal to or greater than 3. For example, N can be equal to 3, 4, 5, 6 or 7. The coordinates X-Y-Z apply in all other respective views where not marked. The lens elements are situated along an optical axis **108** that is aligned with the Z axis from object side to the sensor at the image side.

Each lens element Lᵢ comprises a respective front surface S₂ᵢ₋₁ (the index "2i-1" being the number of the front surface) and a respective rear surface S₂ᵢ (the index "2i" being the number of the rear surface), where "i" is an integer between 1 and N. This numbering convention is used throughout the description. Alternatively, as indicated throughout this description, lens surfaces are marked as "Sₖ", with k running from 1 to 2N. The front surface and the rear surface can, in some cases, be aspherical. This is however not limiting. As shown in FIG. 1A, in some examples, an optical part (i.e. part utilized for light passage toward the sensor) of the first lens element L1 is non-circular, e.g. it has flat top and bottom sections.

FIG. 1B illustrates a side view of a cross section of camera **150.** Camera **150** comprises lens barrel **102,** wherein the lens elements Li and spacers Ri of lens **100** are situated within lens barrel **102.** Camera **150** further comprises image sensor **104** and an optional optical element (e.g. an infrared filter) **106.** In the example shown, two adjacent lens elements are separated by a spacer marked "R_{I}". Thus, lens elements L1 and L2 are separated by a spacer R1, lens elements L2 and L3 are separated by a spacer R2, lens elements L3 and L4 are separated by a spacer R3, and lens elements L4 and L5 are separated by a spacer R4.

As used herein the term "front surface" of each lens element or spacer refers to the surface of a lens element or spacer located closer to the entrance of the camera (camera object side) and the term "rear surface" refers to the surface of a lens element or spacer located closer to the image sensor (camera image side).

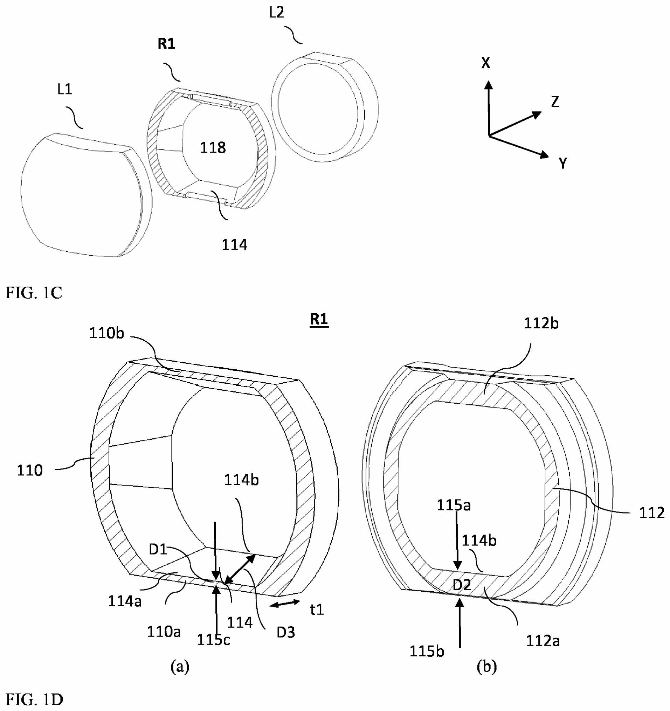

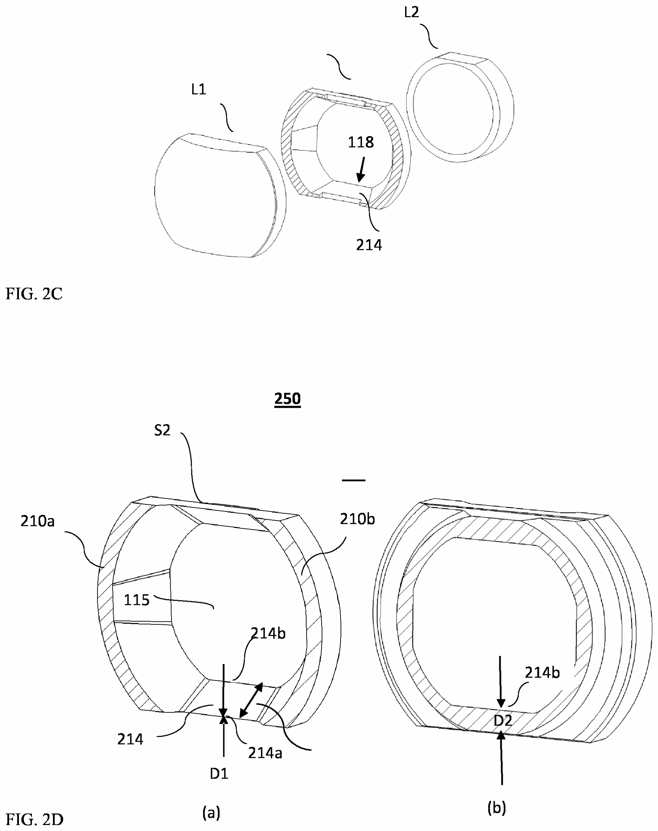

An enlarged view of lens elements L1 and L2 separated by spacer R1 is shown in FIG. 1C, and front (object side) and back (image side) views of spacer R1 are shown in FIG. 2D. Each spacer is designed to have a perimeter and an opening at its center for allowing light passage therethrough towards the sensor. The perimeter can be in contact with a first lens element at one side and a second lens element at the other side. The use of spacers in a lens assembly is known in the art.

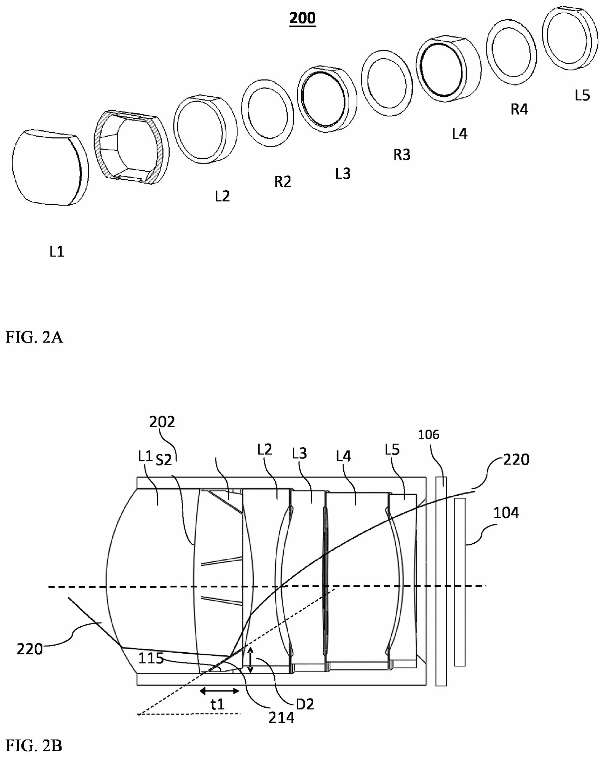

An example of a lens design that may exhibit stray light is described with reference to FIGS. 1B and 2B. In the illustrated example, stray light **120** in camera **150** may arrive for example from reflection on internal surfaces of spacer R1 (facing an internal opening **118)** and thus depends on the shape of spacer R1 (and in particular the shape of its internal surfaces). In the example shown, when assembled in the barrel, a back surface S2 of lens element L1 touches spacer R1 over entire front contact surface **110** of spacer R1, including at bottom and top front surface contact sections **110a** and **110b.** A front surface S3 of lens element L2 touches spacer R1 over an entire back contact surface **112** of spacer R1, including at bottom and top back surface contact sections **112a** and **112b.** The distance between contact points of front contact surface **110a** and back contact surface **112a,** along the Z axis direction, defines a spacer thickness t, which for spacer R1 is marked as t1.

An internal surface **114** of spacer R1 between an edge **114a** of a front contact section **110a** and an edge **114b** of a back contact section **112a** has a length D3 and an inclination (angle) **α.** Spacer R1 has a height D2 (also shown in FIG. 1B) of back contact section **112a** (substantially perpendicular to thickness t1) extending between an internal contour of the spacer (an edge of the internal opening **118** as indicated by arrow **115a** in FIG. 1D) and a base **115** of the inclined surface (indicated by arrow **115b),** setting the inclination (angle) **α.** In some cases, spacer R1 may also have a thickness D1 of front bottom contact section **110a,** extending from the base **115** of the spacer in the X direction towards an external edge of the spacer (indicated by arrow **115c).** Notably a similar surface **114** and thicknesses **D1** and height **D2** exist at the top of spacer R1 (i.e. the lens is axi-symmetric radially along axis X). In other examples, other or additional inclination surfaces similar to **114** may exist at other locations around the perimeter of the spacer. As mentioned above, inclination **α** is determined by spacer thickness t1 and height D2, where $tan α = \frac{D 2}{t 1}$.

According to the illustrated example, given the design of the first lens element L1 and angle **α** and as shown in FIG. 1B, a stray light ray **120** entering the lens from the object side is refracted by lens element L1, hits surface **114** of spacer R1, reflected from the surface, and continues through the lens along an optical path terminating at the image sensor **104** at a point **122.**

According to the subject matter disclosed herein, it is suggested to solve the problem of stray light described above by a special spacer-design devised for this purpose. Examples of the spacer design are described with reference to FIGS. 2A-2D. FIG. 2A shows schematically a lens numbered **200** according to an example of the presently disclosed subject matter in a general isometric view. Lens **200** is shown in a decomposed view where the different lens elements are illustrated separately. FIG. 2B shows first and second object side lens elements of lens **200,** separated by a spacer R1'. FIG. 2C illustrates a side view of a cross section of a camera **250.** Lens **250** comprises lens barrel **202** that accommodates lens **200.** Camera **250** further comprises image sensor **104** and optional optical element **106** (e.g. IR filter). FIG. 2C further illustrates a stray light ray **220** passing through the barrel in the object side direction. FIG. 2D shows in (a) a front, object side and in (b) a back, image side of the spacer of FIG. 2B.

By way of example lens **200** is shown to include five lenses, similar to lens **100.** As mentioned above, this example is not meant to be limiting and a different/greater number of elements is likewise contemplated. According to an example, all the elements of lens **200** are similar to those of lens **100,** except for an "improved" first spacer numbered R1' located between lens elements L1 and L2. Spacer R1' has a more steeply inclined internal surface (positive slope) **214,** having an inclination angle **α'** greater than α, for example an angle **α'** = 33.3°, as compared to angle **α** that equals about 20°. The steeper inclination is achieved in some examples, by shortening the length between edges **214a** and **214b** (as compared to **114a** and **114b** above) to obtain length of inclination D3'. In some examples the height D2 is the same as that of spacer R1. Notably, increasing the inclination angle by increasing height D2 may have an adverse effect, as it would reduce the open space at the center (opening **118)** of the spacer, causing increased blockage of light passing through the lens.

Different than lens **100** described above, where contact between S2 and R1 occurs over the entire front contact surface **110,** here the shorter length of D3' (relative to D3) results in no-contact sections in R1' (e.g. at the bottom and top), which are separated from surface S2 of lens L1 (i.e. section illustrated as contact sections **110a** and **110b** in spacer R1). Contact sections **210a** and **210b,** which are in contact with S2, are located adjacent to the no-contact sections. By allowing no contact between the spacer R1' and S2 at certain sections of the spacer, it is made possible to increase the inclination angle. According to the suggested design, the inclination of the internal inclined surface is greater than a ratio between height D2 and thickness t1, such that, $tan α ′ > \frac{D 2}{t 1} .$. As a result of the steeper inclination of the internal bottom surface **214,** stray light ray **220** entering the lens from the object side is refracted by lens element L1, hits surface **214** of spacer R1' and continues through the lens along an optical path that misses image sensor **104.**

The changes in lens **200** and specifically in spacer R1' as described above introduce significant design flexibility. The increased inclination of a surface such as surface **214** reduces stray light.

The example of surface **214** as a bottom and/or top surface of R1' is not limiting in any way: one, two or more such surfaces can be formed around the circumference of spacer R1' e.g. facing surface S2. In an embodiment (not shown), surface S2 may contact spacer R1' at only three points on its front contact surface, such that most of the side edges include no-contact surfaces (with steeper inclination) such as surface **214.**

It is noted that while the description above refers to a non-circular lens element (having flat top and/or bottom sections), this should not be construed as limiting. According to other examples, the lens element may be circular, with a lens and/or camera including such a circular lens element still benefiting from reduction in stray light due to a spacer design as disclosed herein. The presently disclosed subject matter can be used for mitigating the stray light problem, where the problem exists in one or more sections of the perimeter of the spacer.

As explained above, stray light entering the lens from the object side is refracted by lens element L1, hits some part of the surface of the spacer, and continues through the lens along an optical path towards the sensor. Considering for example a sensor characterized by a rectangular shape, due to the difference in shape between the sensor and the lens (having a circular or substantially circular shape), stray light may hit the sensor when reflected from one side of the spacer, and may miss the sensor when reflected from another side of the spacer. Such differences may also be encountered when the sensor is characterized by sides having different lengths, such as in the case of a rectangular sensor, which is not square shaped.

A spacer (e.g. R1' located between lens elements L1 and L2) can be adapted as described above to have a more steeply inclined internal surface **214** at the sides of the spacer that reflect the stray light so it does not hit the sensor. The higher inclination can be achieved by shortening the length between edges **214a** and **214b** and obtaining a non-contact section D3', as mentioned above.

It is noted that a digital camera **(150, 250)** discussed hereinabove may be a multi-aperture camera that includes one or more additional upright cameras as well as one or more folded cameras. A folded camera comprises a reflecting element (e.g. a mirror or prism) configured to fold light incoming along a first optical path from an object side to a second optical path (substantially perpendicular to the first optical path) along the lens symmetry axis towards the sensor. Examples of folded cameras and multi-aperture cameras that includes such folded cameras (which, when in a multi-aperture camera, are also referred to as "sub-cameras") are described in US Patent No. US9392188 and next.

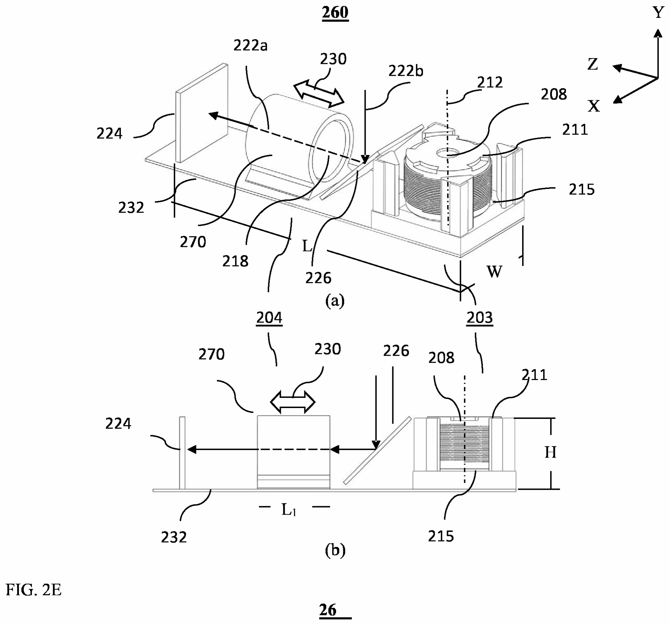

FIG. 2E shows schematically an embodiment of a zoom and auto-focus dual-aperture camera **260** with folded Tele lens in (a) a general isometric view and (b) a sectioned isometric view. The isometric view is shown related to a XYZ coordinate system. Camera **260** comprises two sub-cameras, a regular Wide sub-camera **203** and a Tele sub-camera **204.**

Wide camera **203** includes a Wide optics bloc with a respective aperture **208** (indicating object side of the camera) and an optical lens module **211** (or "lens module" in short) with a symmetry (and optical) axis **212** in the Y direction, as well as a Wide image sensor **215.** Tele sub-camera **204** includes a Tele optics bloc with a respective aperture **218** and an optical lens module **270** with a Tele lens symmetry (and optical) axis **222a,** as well as a Tele image sensor **224.**

Camera **260** further comprises a first flat reflecting element (e.g. mirror or prism) **226** inserted in a "Tele" optical path. The Tele optical path is extended from an object (not shown) through the Tele lens module (or simply "Tele lens") to the Tele sensor and marked by arrows **222b** and **222a.** Arrow **222b** indicates the direction from the object side of the camera and is substantially parallel to symmetry axis **212** of the Wide sub-camera. For simplicity, hereinafter the reflective element is referred to as "mirror", however, this is by way of example only and should not be construed as limiting in any way.

According to one example, the Wide image sensor **215** lies in the X-Z plane, while the Tele image sensor lies a X-Y plane substantially perpendicular to the Tele lens symmetry axis **222a.** Various camera elements may be mounted on a substrate **232,** e.g. a printed circuit board (PCB). It may be said that the Tele sensor is "upright" as it lies in a plane substantially perpendicular to that of Wide sensor **215** and substrate **232.**

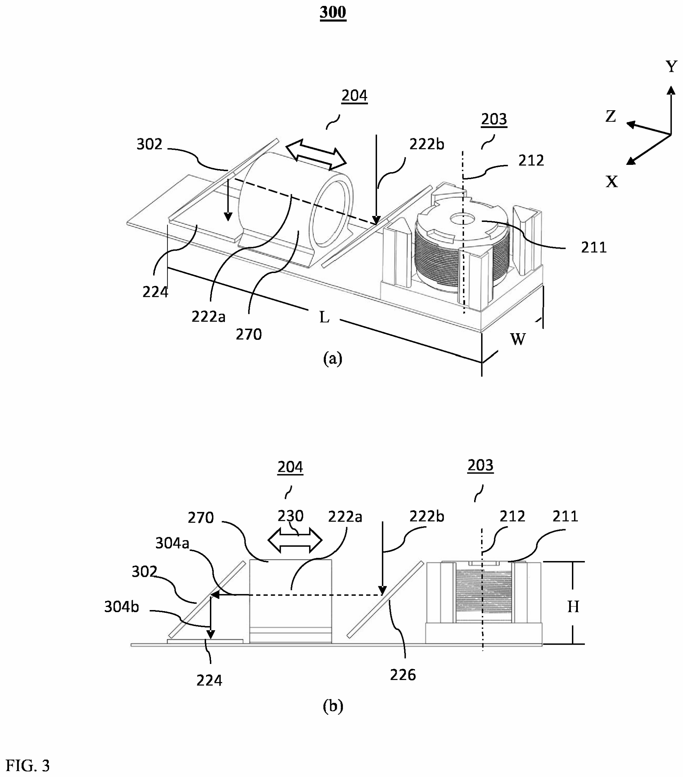

Notably, using a Tele sub-camera with a Tele sensor in an upright position helps to reduce the length of the Tele sub camera and therefore reduces the overall camera footprint, as compared to a Tele sensor positioned in the X-Z plane, as described below with reference to FIG. 3.

According to one example, mirror **226** is inclined at substantially 45° to the Tele lens symmetry axis **(222a)** and to arrow **222b.** The Tele optical path is thus "folded". Hereinafter, a Tele lens having a folded optical path passing therethrough is referred to as a "folded Tele lens" and a Tele sub-camera with such a folded lens is referred to as a "folded Tele sub-camera".

Camera **260** (as well as other cameras mentioned below) may have, according to some non-limiting examples, dimensions and/or parameters as shown in Table 1. These dimensions (given in millimeters) and parameters include a camera width W, a camera length L, a camera height H, a Wide sub-camera effective focal length EFL_{W}, a Wide F-number F#_{W}, a Tele sub-camera effective focal length EFL₁ and a Tele F-number F#_{T}.

**Table 1**

| FIG. | W | L | H | EFLw | EFL_{M} | EFL_{T} | F#_{W} | F#_{M} | F#_{T} |
|---|---|---|---|---|---|---|---|---|---|
| 2A | 5-12 | 20-50 | 4-8 | 2-8 | | 5-25 | 2-3 | | 2-5 |
| 2B | 10-25 | 10-40 | 4-8 | 2-8 | | 5-25 | 2-3 | | 2-5 |
| 3 | 5-12 | 20-50 | 4-8 | 2-8 | | 5-25 | 2-3 | | 2-5 |
| 4 | 5-12 | 20-50 | 4-8 | 2-8 | | 5-25 | 2-3 | | 2-5 |
| 6A | 5-12 | 25-60 | 4-8 | 2-5 | 4-10 | 8-30 | 2-3 | 2-3 | 2-5 |
| 6B | 5-12 | 20-50 | 4-8 | 2-5 | 4-10 | 8-30 | 2-3 | 2-3 | 2-5 |
| 6C | 10-25 | 10-40 | 4-8 | 2-5 | 4-10 | 8-30 | 2-3 | 2-3 | 2-5 |
| 7 | 5-12 | 25-60 | 4-8 | 2-5 | 4-10 | 8-30 | 2-3 | 2-3 | 2-5 |
| 8 | 10-25 | 20-50 | 4-8 | 2-8 | 4-20 | 8-30 | 2-3 | 2-5 | 2-5 |

For example, the folding of the Tele lens module in camera **260** (as well as in cameras **300-600** below) enables the use of a Tele lens module with an EFL_{T} of 12mm while maintaining the overall camera height significantly lower than the height of a camera utilizing a normal upright Tele lens with the same EFL_{T} (e.g. 11.1 mm mentioned in the background section above).

In order to provide more clarity and avoid clutter in the following drawings, some elements similar to or identical to elements in camera **260** may be mentioned, but shown without reference numerals.

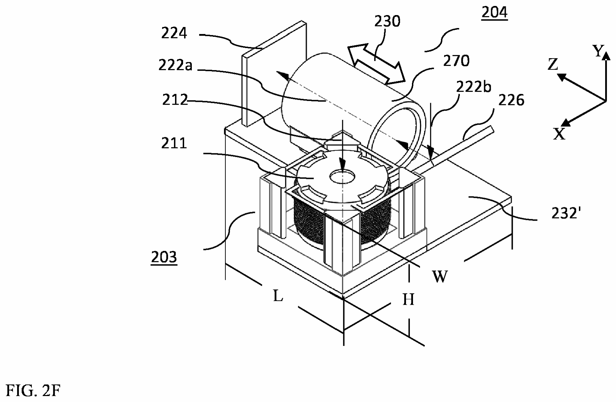

FIG. 2F shows schematically, in a general isometric view, another embodiment of a zoom and auto-focus dual-aperture camera **(260')** with folded Tele lens module. Camera **260'** includes essentially the same elements as camera **260,** and such elements (when numbered) are numbered accordingly with the same numerals. The two cameras differ mainly in the relative positioning (e.g. on substrate **232')** of the Tele and Wide sub-cameras and mirror **226.**

As shown, these elements are arranged such that camera **260'** has a "squarer" footprint than camera **260.** In particular, a width W in camera **260'** is larger than width W in camera **260,** while a length L in camera **260'** is smaller than L in camera **260.** Note that the configuration shown, in which the Wide sub-camera's sides are parallel to respectively the X and Z axes while the Tele lens is essentially aligned along the Z axis, is shown by way of example only, and that in other embodiments each sub-camera may be positioned differently. For example, the Wide sub-camera may have sides not parallel to the X, Y axes and the Tele lens may be aligned in a different direction than Z, as long as the optical axis, before the folding, is parallel to the Wide camera symmetry axis. Camera **260'** may have exemplary dimensions and/or parameters shown in Table 1.

FIG. 3 shows schematically yet another embodiment of a zoom and auto-focus dual-aperture camera with folded Tele lens numbered **300** in (a) a general isometric view and (b) a sectioned isometric view. Camera **300** is substantially identical to camera **260,** except that camera **300** includes a second mirror **302** inserted in the optical path between the Tele lens and Tele sensor **224,** the path marked here by arrows **304a** and **304b.** In addition, and unlike in cameras **260** and **260'** (but as in camera **100),** Tele sensor **224** lies in the X-Z plane (same as the Wide sensor). According to one example, the Wide and Tele sensors may be placed on the same substrate, e.g. a PCB. Alternatively, each sensor may be mounted on a separate PCB. Both mirrors can be inclined at substantially 45⁰ to the Tele lens symmetry axis **222a.**

As in camera **260,** both Wide and Tele sub-cameras may be fixed focus (FF) or auto focus (AF). As in camera **260,** an AF mechanism (not shown) is coupled to and operative to move the Tele lens along the Z axis in a direction shown by an arrow **230,** i.e. parallel to symmetry axis **222a.** Camera **300** may have for example, the same dimensions and/or parameters as camera **260** or be larger (e.g. by about 5-10 mm) along the Z axis.

Camera **300** requires that the Tele lens module is designed such that its back focal length (BFL), i.e. the distance along the optical path from the left hand side of the Tele lens barrel to the mirror, and from there to the Tele image sensor (the combined lengths of arrow **304a** and **304b),** is large enough to enable the inclusion of the second mirror. In addition, the folded Tele geometry in camera **300** allows direct mounting of the Wide and Tele image sensors on a single common PCB. Alternatively, each sensor may be mounted on a separate PCB. Camera **300** can have for example dimensions and/or parameters shown in Table 1.

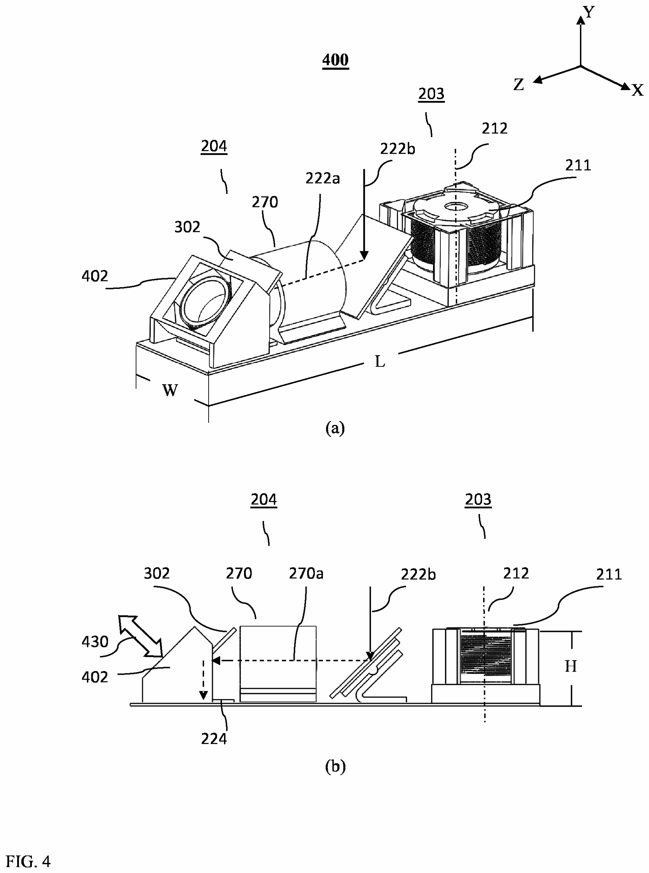

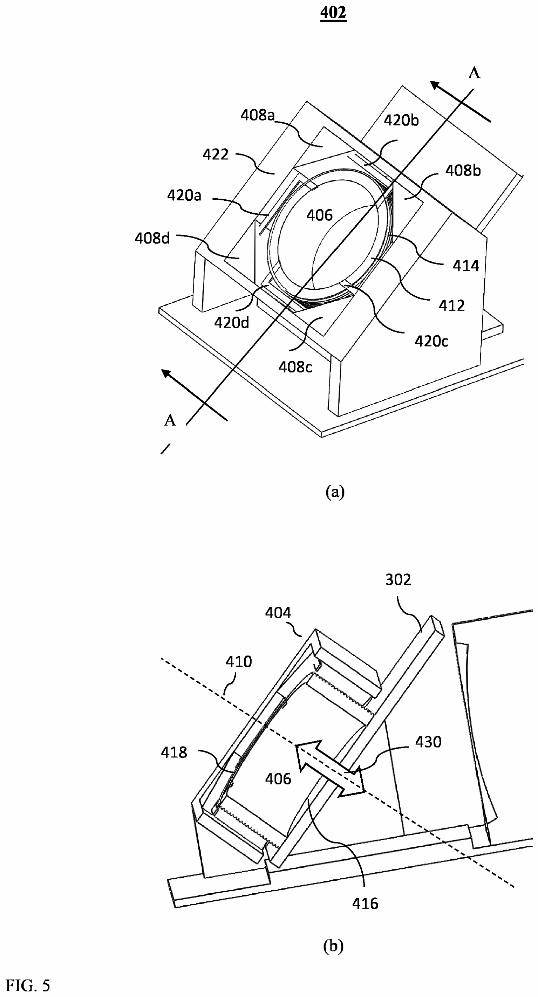

FIG. 4 shows, schematically, an embodiment of a zoom and auto-focus dual-aperture camera with folded Tele lens numbered **400** in (a) a general isometric view and (b) a sectioned isometric view. Camera **400** is substantially identical to camera **300,** except that the Tele sub-camera is auto-focused by means of moving the second mirror using an AF mechanism (see FIG. 5) **402** coupled thereto. Mechanism **402** moves second mirror **302** in a direction perpendicular to its flat plane (e.g. at 45⁰ to the X-Y and X-Z planes) shown by an arrow **430.** The mirror movement range may for example, between 100-500 µm. Alternatively, the second mirror **302** can be moved in other directions to focus the Tele image that is captured by the Tele sensor, for example, along the Z axis or the Y axis. Camera **400** may have for example, dimensions and/or parameters shown in Table 1.

FIG. 5 shows, schematically, details of mechanism **402** in (a) a general isometric view, and (b) a cross sectional view through section A-A. Mechanism **402** includes an electromagnetic actuator comprising a stationary member **404** and a moving member **406.** Stationary member **404** includes four permanent magnets **408a-d.** Moving member **406,** shown here generally to have a cylindrical shape with a symmetry axis **410** includes a core **412** surrounded at least partially by a coil **414.** Moving member **406** is mechanically coupled at one end **416** to mirror **302** and at an opposite end **418** to four springs **420a-d,** which in turn are rigidly coupled to a stationary frame **422.** The number of springs shown is provided by way of example only, and fewer (e.g. one) or more than four springs can be used. In use, a current passing through coil **414** leads to a magnetic force that causes moving member **406** and mirror **302** to move along symmetry axis **410** as indicated by arrow **430.**

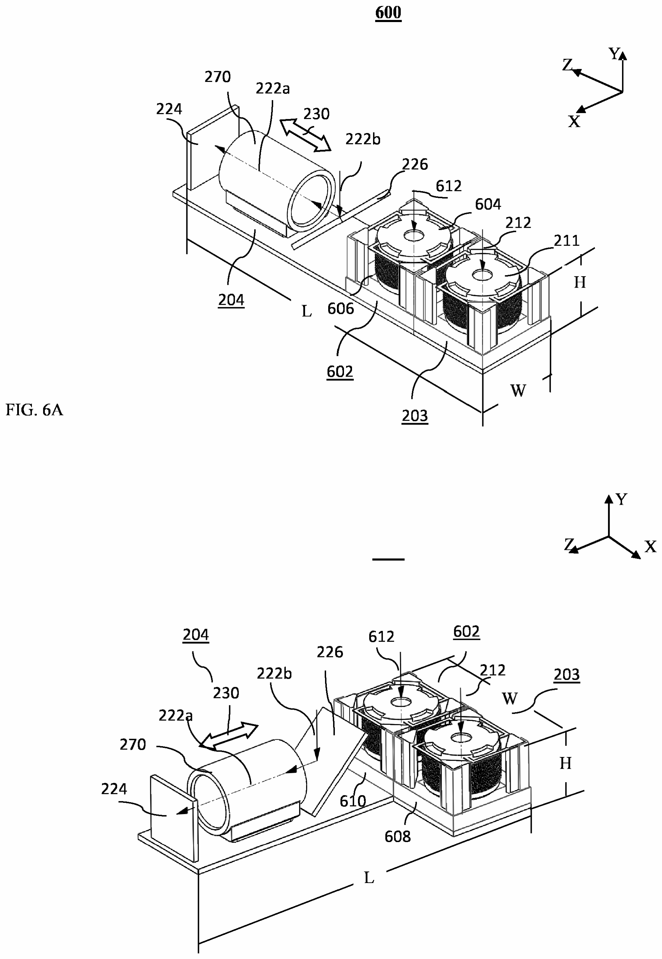

FIG. 6A shows schematically, in a general isometric view, an embodiment of a zoom and auto-focus triple-aperture camera with one folded Tele lens **600.** Camera **600** includes for example, elements and functionalities of camera **260.** That is, camera **600** includes a Wide sub-camera **203** with a Wide lens **211** and a Wide sensor **215,** a Tele sub-camera **204** with a folded Tele lens **270,** a mirror **226** and an "upright" Tele sensor **224.**

In this example, the three sub-cameras are substantially aligned in the Z direction along a common axis. As in camera **260,** Tele lens auto-focus is achieved by moving the Tele lens along the Z axis in a direction shown by arrow **230.** However, in addition to the elements of camera **260,** camera **600** further includes a second Tele (referred to as "Mid" or "M") sub-camera **602** with a Mid lens **604** and a Mid sensor **606.** Mid sub-camera **602** has an EFL_{M} and a FOV_{M} intermediate to those of the Wide and Tele sub-cameras, (see examples in Table 1). A symmetry (and optical) axis **612** of the Mid sub-camera is substantially parallel to axis **212** of Wide sub-camera **203** and direction **222b** in Tele sub-camera **204.** Note that while the Wide and Mid sub-cameras are shown in a particular arrangement (with Mid sub-camera **602** closer to Tele sub-camera **204),** this order may be changed such that the Wide and Mid sub-cameras exchange places. Camera **600** may have for example, dimensions and/or parameters shown in Table 1.

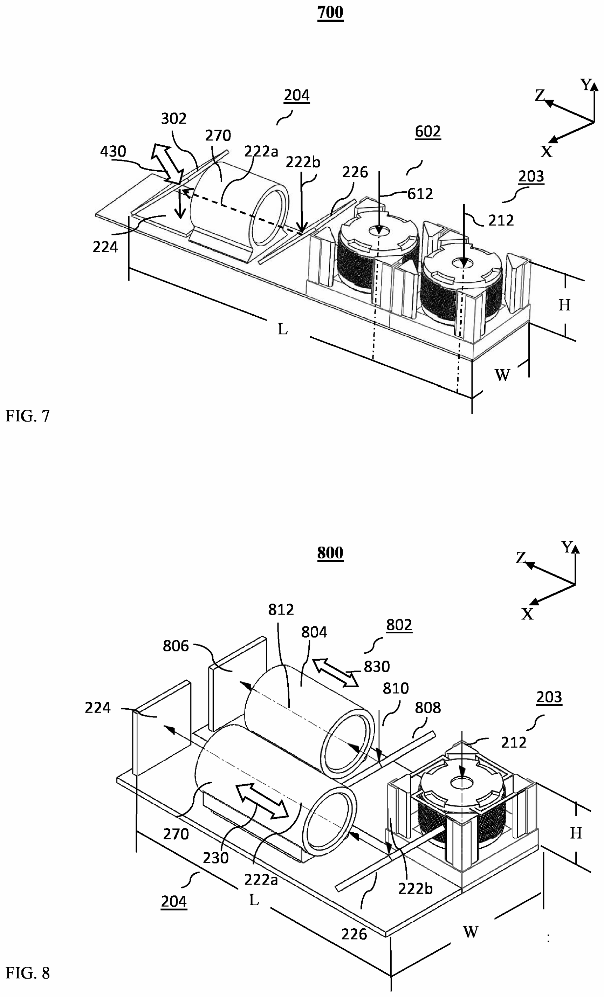

In use, an output FOV of camera **600** (as well as camera **600', 600", 700** and **800)** is defined by a zoom factor ZF. Such an FOV may be marked "FOV_{ZF"}. For example, in zoom-in up to a ZF = ZF_{M} the camera output is the same as the output of a dual-aperture zoom camera with only Wide and Mid sub-cameras, where the Mid sub-camera replaces the Tele sub-camera. When zooming in from ZF_{M} to ZF_{T} the camera output is the same as the output of a dual-aperture zoom camera with only Mid and Tele sub-cameras, where the Mid sub-camera replaces the Wide sub-camera. This provides a "continuous zoom" (i.e. resolution gain vs. ZF) experience. A more detailed explanation of the term "continuous zoom" as used herein, and an example of a continuous zoom experience obtained with a camera, are provided with respect to FIG. 8.

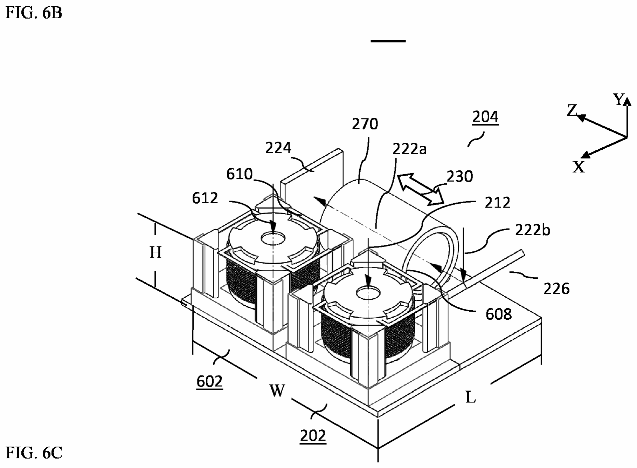

FIG. 6B shows schematically, in a general isometric view, another embodiment of a zoom and auto-focus triple-aperture camera with one folded Tele lens and numbered **600'.** Camera **600'** includes essentially the same elements as camera **600,** but the Wide and Mid sub-cameras are aligned along the Z direction, while the Tele sub-camera has the Z direction as its symmetry axis. As in camera **600,** the positions of the Wide and Mid sub-cameras are interchangeable. Camera **600'** may have for example dimensions and/or parameters shown in Table 1.

FIG. 6C shows schematically, in a general isometric view, yet another embodiment of a zoom and auto-focus triple-aperture camera with one folded Tele lens and numbered 600". Camera **600"** includes essentially the same elements as cameras **600** and **600',** but the positioning of the three sub-cameras is changed such that the folded Tele lens is adjacent to and parallel to a side **608** of Wide sub-camera **203** and a side **610** of Mid sub-camera **602.** As in cameras **600** and **600',** the positions of the Wide and Mid sub-cameras are interchangeable. Camera **600"** may have, for example, dimensions and/or parameters shown in Table 1.

Note that while the triple-aperture camera with one folded Tele lens embodiments of FIGS. 6A-C are shown as including an "upright" Tele sensor **224,** other triple-aperture cameras with one folded Tele lens embodiments may include a second mirror and a Tele sensor positioned in the X-Z plane as in camera **300.** One such embodiment is shown in FIG. 7. FIG. 7 shows schematically, in a general isometric view, yet another embodiment of a zoom and auto-focus triple-aperture camera with one folded Tele lens numbered **700.** Camera **700** may be seen essentially as a camera in which a Mid sub-camera **602** is added to the elements of camera **300.** Alternatively, it can be seen as a camera in which a second mirror **302** is inserted in the optical path between folded Tele lens **270** and Tele sensor **224.** Tele auto-focus may be achieved by (as shown by arrow **430)** moving second mirror **302** (as in camera **400),** or, alternatively, by moving the Tele lens (as in camera **300).** Camera **700** may have for example, dimensions and/or parameters shown in Table 1.

FIG. 8 shows schematically, in a general isometric view, an embodiment of a zoom and auto-focus triple-aperture camera with two folded lenses numbered **800.** Camera **800** may be seen as combining elements existing in camera **260** with an added "folded" Mid sub-camera **802.** Thus, as in camera **260,** camera **800** may include a Wide sub-camera **203** with a Wide lens and Wide sensor, a Tele sub-camera **204** with a folded Tele lens, an upright Tele sensor **224,** and a mirror **226.** Folded Mid sub-camera **802** includes a Mid lens **804** and an upright Mid sensor **806.** An added mirror **808** reflects radiation arriving from the object side in a direction **810** which is parallel to direction **222b** and axis **212,** through Mid lens **804** to the Mid sensor along a Mid lens symmetry axis **812,** thus providing Mid image data which may be combined with Wide and Tele sub-cameras image data. In some examples, mid lens **804** may be moved by an AF mechanism (not shown) along its axis **812** in the Z direction (the movement illustrated by an arrow **830)** to provide Mid autofocus, similar to the Tele autofocus movement illustrated above by arrow **230.**

Alternative embodiments (not shown) of a camera with folded Mid and Tele lenses may include additional mirrors and "flat" Mid and Tele sensors (similar to embodiments shown in FIGS. 3, 4 and 7 for the Tele lens). Furthermore, according to this example, autofocus may be achieved by moving these mirrors instead of the lenses. Camera **800** may have for example, dimensions and/or parameters shown in Table 1. This configuration of camera **800** enables for example EFL_{M} = 3*EFL_{W} and EFL₁ = 9*EFL_{W} while maintaining a camera height of less than 7mm.

While this disclosure has been described in terms of certain embodiments and generally associated methods, alterations and permutations of the embodiments and methods will be apparent to those skilled in the art. The disclosure is to be understood as not limited by the specific embodiments described herein, but only by the scope of the appended claims.

Unless otherwise stated, the use of the expression "and/or" between the last two members of a list of options for selection indicates that a selection of one or more of the listed options is appropriate and may be made.

## Claims

1. A lens module (200) of a digital camera, comprising:
a plurality of N lens elements L1-LN ordered along a lens optical axis starting with a first lens element L₁ from an object side to an image side, and a spacer (R1') comprising a spacer perimeter including a contact section (210a, 210b)
being in contact with an immediately preceding lens element and with a immediately following lens element, and a non-contact section being separated from the immediately preceding lens element,
**characterized in that**
both the immediately preceding lens element and the spacer have a flat top and a flat bottom section,
wherein the non-contact section is located at the flat top section of the spacer and/or at the flat bottom section of the spacer,
wherein the non-contact section comprises a non-contact section internal inclined surface (214) extending between an internal contour (214b) of the spacer and a base (115) of the non-contact section internal inclined surface,
wherein the contact section comprises a contact section internal inclined surface having an inclination less steep than an inclination of the non-contact section internal inclined surface, and
wherein the non-contact section internal inclined surface is designed to redirect stray light so it does not hit an image sensor (104) of the digital camera.

2. The lens module of claim 1,
wherein the non-contact section internal inclined surface has a height D2, wherein the spacer perimeter has a thickness t extending between a contact point of a back face of the spacer facing the immediately following lens element and a contact point of a front face of the spacer facing the immediately preceding lens element, and wherein an inclination of the non-contact section internal inclined surface is greater than a ratio D2/t.

3. The lens module of claim 2, wherein D2/t equals the tangent of an angle between 20 degrees and 33.3 degrees.

4. The lens module of claim 2, wherein height D2 is perpendicular to thickness t.

5. The lens module camera of claim 1, wherein N = 3 - 7.

6. The lens module of claim 1, wherein the immediately preceding lens element is the first lens element L₁ and the immediately following lens element is a second lens element L₂.

7. The lens module of claim 1, wherein all adjacent lens elements are separated by a spacer.

8. The lens module of claim 1, wherein N = 5 and wherein lens elements L1 and L2 are separated by a first spacer, lens elements L2 and L3 are separated by a second spacer, lens elements L3 and L4 are separated by a third spacer, and lens elements L4 and L5 are separated by a fourth spacer.

9. A digital camera including the lens module of any of the claims 1-8, wherein the digital camera also comprises an image sensor (104).

10. The digital camera of claim 9, wherein the digital camera also comprises an optional optical element.

11. The digital camera of claim 9, wherein the image sensor is rectangular, with an image sensor width different from an image sensor height.

12. The digital camera of claim 9, wherein the digital camera is a folded camera that comprises a reflecting element.

13. The digital camera of claim 9, wherein the digital camera is a double-folded camera that comprises a reflecting element.

14. The digital camera of any of the claims 12 or 13, wherein the reflecting element is a prism.

15. The digital camera of any of the claims 12 or 13, wherein the reflecting element is a mirror.

## Patentansprüche

1. Linsenmodul (200) einer Digitalkamera, umfassend:
eine Vielzahl von N Linsenelementen L1-LN, die entlang einer optischen Linsenachse beginnend bei einem ersten Linsenelement L₁ von einer Objektseite zu einer Bildseite geordnet sind, aund einen Abstandshalter (R1'), umfassend einen Abstandshalterumfang, der einen Kontaktabschnitt (210a, 210b), der mit einem unmittelbar vorgelagerten Linsenelement und mit einem unmittelbar nachgelagerten Linsenelement in Kontakt steht, und einen kontaktlosen Abschnitt, der von dem unmittelbar vorgelagerten Linsenelement getrennt ist, beinhaltet, **dadurch gekennzeichnet, dass** sowohl das unmittelbar vorgelagerte Linsenelement als auch der Abstandshalter einen flachen oberen und einen flachen unteren Abschnitt aufweisen,
wobei sich der kontaktlose Abschnitt, an dem flachen oberen Abschnitt des Abstandshalters und/oder an dem flachen unteren Abschnitt des Abstandshalters befindet,
wobei der kontaktlose Abschnitt eine geneigte Innenfläche (214) des kontaktlosen Abschnitts umfasst, die sich zwischen einer Innenkontur (214b) des Abstandshalters und einer Basis (115) der geneigten Innenfläche des kontaktlosen Abschnitts erstreckt,
wobei der Kontaktabschnitt eine geneigte Innenfläche des Kontaktabschnitts, die eine Neigung, die weniger steil als eine Neigung der geneigten Innenoberfläche des kontaktlosen Abschnitts ist, aufweist und wobei die geneigte Innenfläche des kontaktlosen Abschnitts dazu ausgestaltet ist, Streulicht umzulenken, so dass es nicht auf einen Bildsensor (104) der Digitalkamera auftrifft.

2. Linsenmodul nach Anspruch 1,
wobei die geneigte Innenfläche des kontaktlosen Abschnitts eine Höhe D2 aufweist, wobei der Abstandshalterumfang eine Dicke t aufweist, die sich zwischen einem Kontaktpunkt einer Rückseite des Abstandshalters, die dem unmittelbar nachgelagerten Linsenelement zugewandt ist, und einem Kontaktpunkt einer Vorderseite des Abstandshalters, die dem unmittelbar vorgelagerten Linsenelement zugewandt ist, erstreckt, und wobei eine Neigung der geneigten Innenfläche des kontaktlosen Abschnitts größer als ein Verhältnis D2/t ist.

3. Linsenmodul nach Anspruch 2, wobei D2/t dem Tangens eines Winkels zwischen 20 Grad und 33,3 Grad entspricht.

4. Linsenmodul nach Anspruch 2, wobei die Höhe D2 senkrecht zur Dicke t verläuft.

5. Linsenmodulkamera nach Anspruch 1, wobei N = 3 - 7.

6. Linsenmodul nach Anspruch 1, wobei das unmittelbar vorgelagerte Linsenelement das erste Linsenelement L₁ ist und das unmittelbar nachgelagerte Linsenelement ein zweites Linsenelement L₂ ist.

7. Linsenmodul nach Anspruch 1, wobei alle benachbarten Linsenelemente durch einen Abstandshalter getrennt sind.

8. Linsenmodul nach Anspruch 1, wobei N = 5 und wobei die Linsenelemente L1 und L2 durch einen ersten Abstandshalter getrennt sind, Linsenelemente L2 und L3 durch einen zweiten Abstandshalter getrennt sind, Linsenelemente L3 und L4 durch einen dritten Abstandshalter getrennt sind und Linsenelemente L4 und L5 durch einen vierten Abstandshalter getrennt sind.

9. Digitalkamera, die das Linsenmodul nach einem der Ansprüche 1-8 beinhaltet, wobei die Digitalkamera zudem einen Bildsensor (104) umfasst.

10. Digitalkamera nach Anspruch 9, wobei die Digitalkamera zudem ein optionales optisches Element umfasst.

11. Digitalkamera nach Anspruch 9, wobei der Bildsensor rechteckig ist, wobei sich eine Breite des Bildsensors von einer Höhe des Bildsensors unterscheidet.

12. Digitalkamera nach Anspruch 9, wobei die Digitalkamera eine gefaltete Kamera ist, die ein reflektierendes Element umfasst.

13. Digitalkamera nach Anspruch 9, wobei die Digitalkamera eine doppelt gefaltete Kamera ist, die ein reflektierendes Element umfasst.

14. Digitalkamera nach einem der Ansprüche 12 oder 13, wobei das reflektierende Element ein Prisma ist.

15. Digitalkamera nach einem der Ansprüche 12 oder 13, wobei das reflektierende Element ein Spiegel ist.

## Revendications

1. Module de lentille (200) d'une caméra numérique, comprenant :
une pluralité de N éléments de lentille L1 à LN ordonnés le long d'un axe optique de lentille commençant par un premier élément de lentille L₁ d'un côté objet à un côté image, et une entretoise (R1') comprenant un périmètre d'entretoise comportant une section de contact (210a, 210b) qui est en contact avec un élément de lentille immédiatement précédent et avec un élément de lentille immédiatement suivant, et une section sans contact qui est séparée de l'élément de lentille immédiatement précédent, **caractérisé en ce que** l'élément de lentille immédiatement précédent et l'entretoise ont tous deux une section supérieure plate et une section inférieure plate,
dans lequel la section sans contact est située au niveau de la section supérieure plate de l'entretoise et/ou au niveau de la section inférieure plate de l'entretoise,
dans lequel la section sans contact comprend une surface inclinée interne de section sans contact (214) s'étendant entre un contour interne (214b) de l'entretoise et une base (115) de la surface inclinée interne de section sans contact,
dans lequel la section de contact comprend une surface inclinée interne de section de contact ayant une inclinaison moins raide qu'une inclinaison de la surface inclinée interne de section sans contact, et dans lequel la surface inclinée interne de section sans contact est conçue pour rediriger la lumière parasite afin qu'elle ne frappe pas un capteur d'image (104) de la caméra numérique.

2. Module de lentille selon la revendication 1,
dans lequel la surface inclinée interne de section sans contact a une hauteur D2, dans lequel le périmètre d'entretoise a une épaisseur t s'étendant entre un point de contact d'une face arrière de l'entretoise faisant face à l'élément de lentille immédiatement suivant et un point de contact d'une face avant de l'entretoise faisant face à l'élément de lentille immédiatement précédent, et dans lequel une inclinaison de la surface inclinée interne de section sans contact est supérieure à un rapport D2/t.

3. Module de lentille selon la revendication 2, dans lequel D2/t est égal à la tangente d'un angle compris entre 20 degrés et 33,3 degrés.

4. Module de lentille selon la revendication 2, dans lequel la hauteur D2 est perpendiculaire à l'épaisseur t.

5. Caméra à module de lentille selon la revendication 1, dans laquelle N = 3 à 7.

6. Module de lentille selon la revendication 1, dans lequel l'élément de lentille immédiatement précédent est le premier élément de lentille L₁ et l'élément de lentille immédiatement suivant est un second élément de lentille L₂.

7. Module de lentille selon la revendication 1, dans lequel tous les éléments de lentille adjacents sont séparés par une entretoise.

8. Module de lentille selon la revendication 1, dans lequel N = 5 et dans lequel les éléments de lentille L1 et L2 sont séparés par une première entretoise, les éléments de lentille L2 et L3 sont séparés par une deuxième entretoise, les éléments de lentille L3 et L4 sont séparés par une troisième entretoise et les éléments de lentille L4 et L5 sont séparés par une quatrième entretoise.

9. Caméra numérique comportant le module de lentille selon l'une quelconque des revendications 1 à 8, dans laquelle la caméra numérique comprend également un capteur d'image (104).

10. Caméra numérique selon la revendication 9, dans laquelle la caméra numérique comprend également un élément optique optionnel.

11. Caméra numérique selon la revendication 9, dans laquelle le capteur d'image est rectangulaire, avec une largeur de capteur d'image différente d'une hauteur de capteur d'image.

12. Caméra numérique selon la revendication 9, dans laquelle la caméra numérique est une caméra pliée qui comprend un élément réfléchissant.

13. Caméra numérique selon la revendication 9, dans laquelle la caméra numérique est une caméra à double pliage qui comprend un élément réfléchissant.

14. Caméra numérique selon l'une quelconque des revendications 12 ou 13, dans laquelle l'élément réfléchissant est un prisme.

15. Caméra numérique selon l'une quelconque des revendications 12 ou 13, dans laquelle l'élément réfléchissant est un miroir.
